**Europäisches Patentamt**

**European Patent Office**

**Office européen des brevets**

(11) Veröffentlichungsnummer: **0 460 244 A1**

## (12) EUROPÄISCHE PATENTANMELDUNG

(21) Anmeldenummer: 90108443.4

(22) Anmeldetag: 04.05.90

(51) Int. Cl.5: **B01J 20/34**, C01B 31/08

Ein Antrag gemäss Regel 88 EPÜ auf Berichtigung der Beschreibung und Ansprüche liegt vor. Über diesen Antrag wird im Laufe des Verfahrens vor der Prüfungsabteilung eine Entscheidung getroffen werden (Richtlinien für die Prüfung im EPA, A-V, 2.2).

(43) Veröffentlichungstag der Anmeldung:
**11.12.91 Patentblatt 91/50**

(84) Benannte Vertragsstaaten:
**AT CH DE FR GB LI NL**

(71) Anmelder: **Heller, Hans**
**Greiffenbergstrasse 33**
**W-8600 Bamberg(DE)**

Anmelder: **Dänekamp, Gerd**
**Wilhelmstrasse 13**
**W-2083 Halstenbek(DE)**

(72) Erfinder: **Heller, Hans**
**Greiffenbergstrasse 33**
**W-8600 Bamberg(DE)**
Erfinder: **Dänekamp, Gerd**
**Wilhelmstrasse 13**
**W-2083 Halstenbek(DE)**

(54) **Vorrichtung und Verfahren zum Desorbieren von Aktivkohle.**

(57) Vorrichtung zum Desorbieren von Aktivkohle, mit einer Einrichtung zum elektrischen Erhitzen der Aktivkohle.

FIGUR 2

EP 0 460 244 A1

Die Erfindung betrifft eine Vorrichtung und ein Verfahren zur Reinigung von Gasen oder Flüssigkeiten mit Hilfe von Aktivkohlefiltern.

Zum Zweck der Reinigung von Gasen oder Flüssigkeiten von organischen oder anorganischen Bestandteilen (Partikel) ist es bekannt, diese Gase oder Flüssigkeiten durch ein Aktivkohlebett mit einem Aktivkohlefilter zu leiten, wobei die Partikel durch Nebenvalenzbindungskräfte adsorptiv an der Aktivkohle angelagert werden und die Gase oder Flüssigkeiten den Filter von diesen Partikeln weitgehend befreit verlassen. Der Vorgang des Anlagerns von Partikeln an Aktivkohle wird Adsorption genannt.

Die Aufnahmekapazität von Aktivkohlefiltern wird durch ihre Größe natürlich begrenzt. Ist ein Aktivkohlefilter mit organischen oder anorganischen Partikeln saturiert, so besteht die Möglichkeit, diesen Filter in einem Reinigungsprozess, Desorption genannt, von den angesammelten Partikeln zu befreien. Nach erfolgter Desorption ist das Aktivkohlefilter wieder zur Adsorption von Partikeln geeignet.

Um für eine mit Hilfe von Aktivkohlefiltern arbeitende Reinigungsvorrichtung einen kontinuierlichen Reinigungsbetrieb aufrechtzuerhalten, werden eine Mehrzahl solcher Filter, meistens zwei, im sogenannten Wechselbetrieb gefahren, wobei sich die beiden Filter abwechelnd im Adsorptions- bzw. Desorptionsprozess befinden.

Generell verhalten sich die Temperatur T und die Aufnahmefähigkeit F des Aktivkohlefilters hinsichtlich der Partikel bei gleichbleibendem Anteil Y an Verunreinigungspartikeln in dem zu reingenden Medium (Gas, Flüssigkeit), zueinander auf nicht lineare Weise umgekehrt proportional.

Der Anteil Y an Verunreinigungspartikeln in dem zu reingenden Medium und die Aufnahmefähigkeit F der Aktivkohle für Verunreinigungspartikel verhalten sich bei konstanter Temperatur zueinander auf nicht lineare Weise proportional.

Um bei der Desorption die Verunreinigungspartikel von der Kohle zu entfernen muß die Bindungsenergie der Partikel an die Kohle (Desorptionsenergie) aufgebracht werden.

Die Desorption der Verunreinigungspartikel von der Kohle findet deshalb in der Regel bei gegenüber der Adsorption erhöhten Temperaturen und bei Drücken zwischen 0 und 1 bar statt, wobei die Verunreinigungspartikel durch Zufuhr von Wärmeenergie von der Kohle gelöst werden und dabei von einem Gas (meist Stickstoff, Wasserdampf oder Luft), welches während des Desorptionsvorgangs permanent durch die Kohle geleitet wird, aus der Kohle ausgetragen werden.

In der Praxis haben sich insbesondere zwei Verfahren zur Zufuhr von Wärmeenergie für die Desorption der Verunreinigungspartikel bewährt:

Verfahren A:

Zufuhr von Desorptionsenergie mittels heißer Trägergase

Dieses Verfahren wird meist bei Temperaturen bis 200 °C und bei Athmosphärendruck durchgeführt.

Heiße Trägergase, beispielsweise Inertgase oder Wasserdampf, werden durch den Aktivkohlefilter geleitet und erwärmen diesen bis zur Desorptionstemperatur. Gleichzeitig sorgen sie für den Abtransport der Verunreinigungspartikel. Die für die Desorption der Verunreinigungspartikel von der Kohle notwendige Desorptionsenergie wird bei diesen Verfahren also von dem Abtransportgas für die Verunreinigungspartikel selbst geliefert.

Die Trägergase werden nach Verlassen des Aktivkohlefilters mittels Auskondensierens (im Fall der Wasserdampfdesorption) bzw. Auskondensierens der Verunreinigungspartikel (im Fall der Inertgasdesorption) zurückgewonnen. Bei Inertgasdesorption wird das abgemagerte Gas wieder erhitzt und erneut in den Aktivkohlefilter geleitet.

Diese Verfahren sind sehr energieaufwendig, da die Trägergase zunächst auf Desorptionstemperatur aufgeheizt werden müssen (Inertgasdesorption),bzw. verdampft werden müssen (Wasserdampfdesorption) und nach Verlassen des Aktivkohlefilters wieder gekühlt bzw. kondensiert werden müssen.

Die Bewältigung der großen Trägergasströme erfordert große und aufwendige Wärmetauscher und bei Inertgasdesorption von leichtflüchtigen Verunreinigungspartikeln oft Kältemaschinen zur Abmagerung des Inertgases. Zur Desorption von einem Kilogramm Verunreinigungspartikel werden beispielsweise bei Wasserdampfdesorption ca 4 kg Wasserdampf benötigt, der zunächst erzeugt und nach Desorption wieder kondensiert werden muß.

Verfahren B:

Zufuhr der Desorptionsenergie mittels Wärmeleitung

Dieses Verfahren wird meist bei Temperaturen bis 200 °C und Drücken zwischen 0 und 1 bar, bevorzugt jedoch im Vakuum durchgeführt. Die Aktivkohle befindet sich dabei beispielsweise in dem Mantelraum einer Geraderohrbündelapperatur oder einer ähnlichen Apperatur. Die Zufuhr der Wärme zum Erreichen der Desorptionstemperatur, sowie die Zufuhr der Desorptionsenergie selbst erfolgt über die große Oberfäche des Rohrbündels, durch welches ein geeigneter Wärmeträger strömt. Der Abtranport der Verunreinigungspatikel erfolgt wie im Verfahren A über ein Trägergas, das im Gegensatz zum Verfahren A jedoch nicht heiß zu sein braucht. Möglich ist es dabei auch, auf das Trägergas vollständig zu verzichten.

Die Wärmeübertragung in das Innere des Aktivkohlebettes erfolgt dabei mittels Wärmeleitung und Wärmestrahlung von einem Aktivkohlekorn zum anderen bis zum sich Einstellen. eines thermischen Gleichgewichtes.

Ein Nachteil dieses Verfahrens ist, daß aufgrund der geringen Wärmeleitfähigkeit von Aktivkohle große Wärmeaustauschflächen und damit große und aufwendige Adsorber mit relativ geringer Aktivkohleaufnahmefähigkeit benötigt werden.

Ein weiterer Nachteil ist, das das Trägergas, indem es sich den Weg des geringsten ihm entgegenstehenden Widerstandes sucht, bevorzugt entlang der Grenzfläche zwischen Rohrinnenwand und Aktivkohle strömt. Eine solche Randströmung ist bei diesem Verfahren besonders stark ausgeprägt, weil die Berührungsfläche der Aktivkohle bezogen auf das Füllgewicht ein Vielfaches der in anderen Verfahren ist, da nur eine relativ große Berührungsfläche über den Querschnitt der in dem Wärmetauscher ruhenden Aktivkohle ein konstantes und schnelles Erwärmen ermöglicht. Dadurch verringert sich die Durchbruchsdauer der Verunreinigungspartikel gegenüber den in anderen Verfahren verwendeten Adsorbern.

Ein Ziel der vorliegenden Erfindung ist es, das oben geschilderte Verfahren der Zufuhr der Desorptionsenergie mittels Wärmeleitung mit vermindertem Energieaufwand durchzuführen bzw. bei gleichem Energieaufwand seine Wirksamkeit zu steigern. Dabei werden die spezifischen Nachteile des im Stande der Technik bekannten Verfahrens vermieden.

Für die erfindungsgemäße Vorrichtung wird dieses Ziel dadurch erreicht, daß eine elektrische Einrichtung zum Erhitzen der Aktivkohle vorgesehen ist.

Für das erfindungsgemäße Verfahren wird dieses Ziel dadurch erreicht, daß die Aktivkohle elektrisch erhitzt wird.

Die Zufuhr der Desorptionsenergie erfolgt bei dem erfindungsgemäßen Verfahren in einfacher und wirtschaftlicher Weise unabhängig von dem Umgebungsdruck. Die Desorption kann im Vakuum vorgenommen werden, wodurch sich weiter unten aufgezeigte Vorteile gegenüber der Desorption bei Athmosphärendruck ergeben.

Ein Vorteil der Desorption im Vakuum liegt darin, daß die Desorption im Vakuum gegenüber einer Desorption bei Athmosphärendruck bei gleicher Temperatur mit einer um den Faktor $1/n$ reduzierten Trägergasmenge bei gleicher Wirksamkeit hinsichtlich des erreichbaren Reinheitsgrades des Aktivkohle durchgeführt werden kann, wobei $n$ das Verhältnis von Athmosphärendruck zu Desorptionsdruck bezeichnet.

Da die Zufuhr der notwendigen Desorptionsenergie zum Erreichen und Aufrechterhalten der notwendigen Desorptionstemperatur über einen elektrischen Strom durch das Aktivkohlebett erfolgt, können wie im Verfahren B geringe Mengen eines relativ kühlen Trägergases verwendet werden, bzw. kannauf dieses verzichtet werden, wobei jedoch die Nachteile großer Wärmetauscherflächen vermieden werden. Bei großen Wärmetauscherflächen (kleinen Rohrdurchmessern) würde das Trägergas dabei auf grund von Randströmung am Rand des Filterbettes verstärkt an der Kohle vorbeifließen und seine Aufgabe, den Abtranport von Verunreinigungspartikeln, nur in eingeschränktem Maße erfüllen. Die Verwendung eines Trägergases bei geringem Druck führt zu dem weiteren Vorteil der Erfindung, daß am Ausgang des Filters durch Erhöhung des Druckes des Trägergases auf Normaldruck eine Erhöhung der Kondensationstemperatur der Partikel im Trägergases erreicht wird. Hierdurch wird erreicht, daß die Energiezufuhr zum Auskondensieren sehr stark vermindert werden kann und kleinere Aufwärm- und Abkühlaggregate verwendet werden können. Dadurch wird die Ernergiemenge für das sequentielle Bereitstellen und Kondensieren des Trägergases insgesamt reduziert.

Dabei können um ein Mehrfaches des Faktors $1/n$ kleinere Verdampfungs- bzw. Kondensationseinrichtungen verwendet werden, da mit steigendem Anteil an kondensierbaren Bestandteilen der K-Wert des Wärmedurchgangs bei der Kondensation schneller als linear ansteigt.

Ein weiterer Vorteil der Desorption im Vakuum liegt darin, daß temperaturempfindliche Verunreinigungsbestandteile bei geringerer Temperatur desorbiert werden können, da gegenüber der Athmosphärendruckdesorption der gleiche Reinigungseffekt der Aktivkohle schon bei geringeren Temperaturen ermöglicht wird.

Ein weiterer Vorteil des erfindungsgemäßen Verfahrens und der erfindungsgemäßen Vorrichtung ist, daß die Erwärung der Aktivkohle sehr homogen erfolgt.

Gegenüber dem oben beschriebenen Desorptionsverfahren A, bei dem die Desorptionsenergie der Aktivkohle mittels eines heißen Trägergases zugeführt wird, hat das erfindungsgemäße Verfahren der Zufür von Wärme in die Aktivkohle mittels elektrischen Stroms den Vorteil, daß der Wärmeeintrag gerade nicht mittels eines Trägergases erfolgt. Der Energieeintrag mittels eines Trägergases erfolgt nämlich proportional der Trägergasmasse. Bei sinkendem Desorptionsdruck steigt das spezifische Volumen des Trägergases und damit sinkt der volumenspezifische Wärmeeintrag bei gleichem Volumenstrom. Große Volumenströme zur Bewältigung der im Umschaltbetrieb vollzogenen zeitlich begrenzten Desorptionsdauer erfordern großvolumige Armaturen, Rohrleitungen und Vakuumpumpen. Desweiteren sinkt bei sinkendem Desorptionsdruck der Wärmeübergangskoeffizient vom Trägergas auf die Aktivkohle, weshalb dieses Desorptionsverfahren in der Praxis unwirtschaftlich ist.

Ein weiterer Vortei des erfindungsgemäßen Desorptionsverfahrens gegenüber dem Desorptionsverfahren A, bei dem die Desorptionsenergie der Aktivkohle mittels eines heißen Trägergases zugeführt wird liegt darin, daß das Aufheizen der Aktivkohle entsprechend der Höhe der angelegten Spannung sehr leicht gesteuert werden kann und schneller als nach diesem Verfahren durchgeführt werden kann. Desweiteren kann das Abtragen der Verunreinigungspartikel mit Hilfe von Wasserdampf erfolgen, ohne daß dieser dabei auf der Aktivkohle kondensieren kann. Ein solches Kondensieren von Wasserdampf tritt bei dem Verfahren A der Desorption mittels eines heißen Trägergases zwangsläufig auf und hat zur Folge, daß die Diffusion der zu desorbierenden Verunreinigungspartikel durch das Porensystem der Aktivkohle in das Trägergas behindert wird, wodurch die Desorption gestört und der Desorptionsvorgang insgesamt verängert wird.

Im folgenden wird die Erfindung anhand von Ausführungsbeispielen der erfindungsgemäßen Vorrichtung beschrieben, die in den Figuren der Zeichnung dargestellt sind. Dabei beziehen sich gleiche Bezugzeichen stets auf gleiche Teile.

Im einzelnen zeigt:

Fig.1    eine Ausführungsform der erfindungsgemäßen Vorrichtung

Fig.2    eine andere Ausführungsform der erfindungsgemäßen Vorrichtung

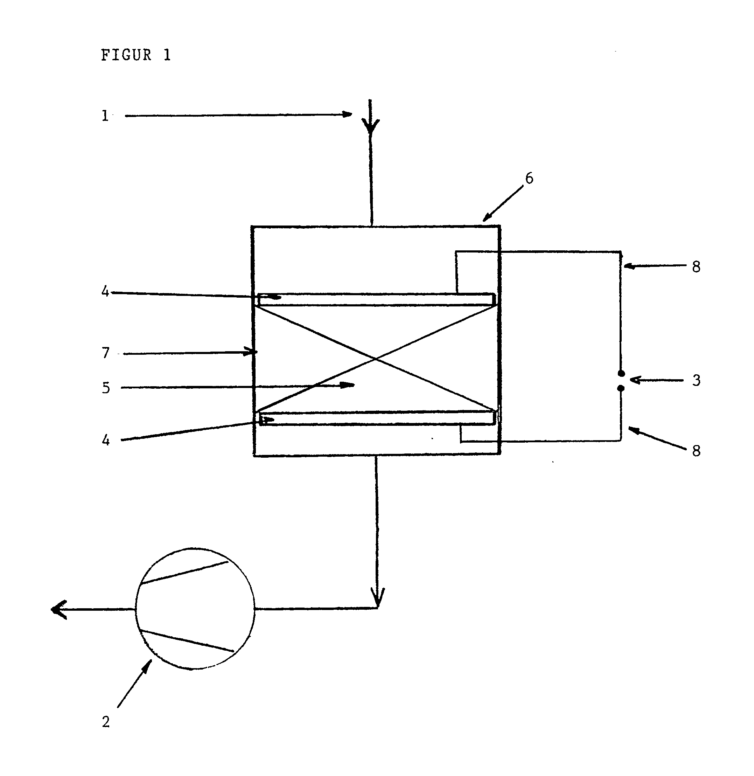

Fig. 1 zeigt eine Ausführungsform der erfindungsgemäßen Vorrichtung. Ein Aktivkohlebett 7 mit einer Aktivkohleschüttung 5, die zwischen zwei Elektroden 4 angeordnet ist und in elektrischem Kontakt mit diesen Elektroden steht. Eine Spannungsquelle 3 erzeugt eine elektrische Spannung U zwischen den Elektroden 4, die das Fließen eines elektrischen Stroms durch die Aktivkohleschüttung von einer Elektrode zur anderen zur Folge hat. Dabei erwärmt sich jedes stromdurchflossene Aktivkohlekorn, wobei die Erwärmung der Stromstärke proportional ist. Das Aktivkohlebett 7, die Elektroden 4 und die Zuleitungen 8 sind in einem Behälter 6 derart untergebracht, das ein Gas durch das Aktivkohlebett 7 strömen kann. Die Desorption findet bei einem Druck von 0 bis 1 bar statt. Dabei erwärmt der elektrische Strom das Aktivkohlebett, wobei die desorbierten Verunreinigungspartikel mittels eines geeigneten Verdichters 2 eines Trägergases 1 aus dem Bett 7 ausgetragen werden.

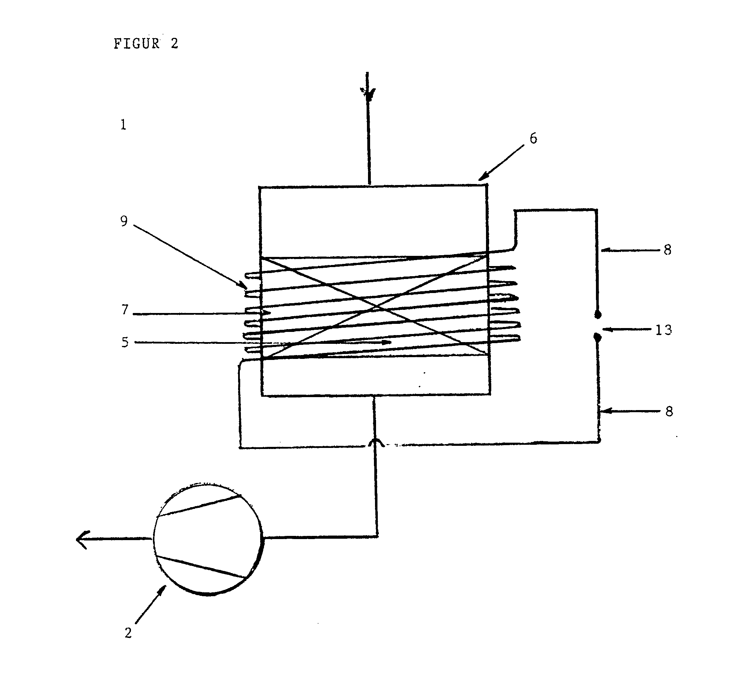

Fig. 2 zeigt eine andere Ausführungsform der erfindungsgemäßen Vorrichtung. Ein Aktivkohlebett mit einer Aktivkohleschüttung ist von einer Spule 9 umgeben. Diese Spule 9 ist über Zuleitungen mit einer Wechselstromquelle 13 elektrisch verbunden. Bei Schließen des Stromkreises wird im Inneren der Spule ein magnetisches Feld aufgebaut. Die zeitliche Änderung dieses Magnetfeldes bewirkt einen sich zeitlich ändernden magnetischen Fluß, der einen sich zeitlich ändernden Strom in dem Aktivkohlebett induziert (Wirbelstrombildung). Dieser Strom bewirkt die Erwärmung jedes stromdurchflossenen Aktivkohlekorns, wobei die Erwärmung der Stromstärke proportional ist. Das Aktivkohlebett 7, ist in einem Behälter 6 derart untergebracht, das ein Gas durch das Aktivkohlebett 7 strömen kann. Die Desorption findet bei einem Druck von 0 bis 1 bar statt. Dabei erwärmt der Strom das Aktivkohlebett, wobei die desorbierten Verunreinigungspartikel mittels eines geeigneten Verdichters 2 eines Trägergases 1 aus dem Bett 7 ausgetragen werden.

**Patentansprüche**

1.  Vorrichtung zum Desorbieren von Aktivkohle mit mindestens einer Öffnung für Gase, gekennzeichnet durch eine elektrische Einrichtung zum Erhitzen der Aktivkohle.

2.  Vorrichtung nach Anspruch eins, dadurch gekennzeichnet, daß die Einrichtung zum Erhitzen der Aktivkohle mindestens zwei Elektoden enthält, zwischen denen eine elektrische Spannung aufgebaut ist.

3.  Vorrichtung nach Anspruch eins, dadurch gekennzeichnet, daß zwischen der Aktivkohle und den Elektroden eine Schicht aus Graphit angeordnet ist.

4.  Vorrichtung nach Anspruch eins, dadurch gekennzeichnet, daß die Aktivkohle von einer stromdurchflossenen Spule umgeben ist, die in der Aktivkohle elektrische Wirbelströme induziert.

5.  Vorrichtung nach einem der vorherigen Ansprüche, dadurch gekennzeichnet daß die Leitfähigkeit der Aktivkohle mittels Kompression erhöht wird.

6.  Vorrichtung nach Anspruch fünf, dadurch gekennzeichnet, daß die Kompression durch Erzeugung eines Vakuums an einer Seite des Aktivkohlebettes erreicht wird.

7.  Verfahren zum Desorbieren von Aktivkohle mit Hilfe eines Trägergases, dadurch gekennzeichnet, daß die Aktivkohle elektrisch erhitzt wird.

8. Verfahren nach Anspruch fünf, dadurch gekennzeichnet, daß das Aufheizen der Aktivkohle mit Hilfe eines Stromflusses durch die Aktivkohle erreicht wird.

9. Verfahren nach Anspruch sechs, dadurch gekennzeichnet, daß die Aktivkohle zwischen mindestens zwei mit elektrischer Spannung beladenen Elektroden angeordnet ist.

10. Verfahren nach Anspruch fünf, dadurch gekennzeichnet, daß der Stromfluß durch die Aktivkohle mit Hilfe einer stromdurchflossenen Spule induziert wird.

FIGUR 1

FIGUR 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | EP-A-0 104 749 (ACTIVATED CARBON SERVICES) <br> * Seiten 2-9,28-31 * <br> — — — | 1,2,5,7,8,9 | B 01 J 20/34 <br> C 01 B 31/08 |
| Y | GB-A-1 219 819 (THE DOW CHEMICAL CO.) <br> * Seite 2, Zeile 36 - Seite 3, Zeile 16 * <br> — — — | 1,2,5,7,8,9 | |
| X | DE-C-2 541 48 (IMBERT) <br> * Seite 2, Zeilen 8-108 * <br> — — — | 1,2,3,9 | |
| X | CHEMICAL ABSTRACTS, Band 98, 1983, Seite 127, Zusammenfassung Nr. 145616p, Columbus, Ohio, US; <br> & JP-A-57 150 434 (INDUCTIVE RECOVERY SYSTEMS) 17-09-1982 <br> * Zusamenfassung * <br> — — — | 1,4,10 | |
| A | CHEMICAL ABSTRACTS, Band 87, 1977, Seite 134, Zusammenfassung Nr. 87123k, Columbus, Ohio, US; <br> & JP-A-77 66 896 (SHIN-ETSU CHEMICAL IND. CO., LTD) 02-06-1977 <br> — — — | | |
| A | CHEMICAL ABSTRACTS, Band 98, 1983, Seite 108, Zusammenfassung Nr. 74337k, Columbus, Ohio, US; D. MIODUSZEWSKI: "Inductive heating of spent granular activated carbon", <br> & GOV. REP. ANNOUNCE. INDEX (U.S) 1982, 82(20), 4066 <br> — — — | | RECHERCHIERTE SACHGEBIETE (Int. Cl.5) <br><br> B 01 J <br> C 01 B |
| A | US-A-4 322 394 (MEZEY) <br> — — — — — | | |

Der vorliegende Recherchenbericht wurde für alle Patentansprüche erstellt

| Recherchenort | Abschlußdatum der Recherche | Prüfer |
|---|---|---|
| Den Haag | 03 Januar 90 | WENDLING J.P. |